# EUROPEAN PATENT APPLICATION

(11) **EP 4 753 317 A2**
(43) Date of publication of application: **03.06.2026**
(21) Application number: 26172411.6
(22) Date of filing: 08.10.2020
(51) Int. Cl.: H04W 24/02

(54) **RELAYING SERVICE REGISTRATION EVENT VIA E2 INTERFACE IN WIRELESS ACCESS NETWORK COMMUNICATION SYSTEM**

(30) Priority: 08.10.2019 US 201962912237 P
(62) Divisional of application: 25152591.1
(71) Applicant: Samsung Electronics Co., Ltd., Suwon-si, Gyeonggi-do 16677 (KR)
(72) Inventor: Song, Junhyuk, 16677 Suwon-si, Gyeonggi-do (KR); Oak, Jeongyeob, 16677 Suwon-si, Gyeonggi-do (KR); Lee, Chungkeun, 16677 Suwon-si, Gyeonggi-do (KR)
(74) Representative: Gulde & Partner

(57) **Abstract**

The disclosure relates to a pre-5^{th}-Generation (5G) or 5G communication system to be provided for supporting higher data rates Beyond 4^{th}-Generation (4G) communication system such as Long Term Evolution (LTE). The present disclosure relates to a 5th generation (5G) or pre-5G communication system for supporting a higher data transmission rate after a 4th generation (4G) communication system such as long-term evolution (LTE). According to various embodiments of the present disclosure, a method performed by an E2 node may include transmitting a radio access network (RAN) intelligent controller (RIC) indication message to an RIC via an E2 interface, the RIC indication message may include indication type information, and the indication type may be one of types including 'insert' and 'report.

## Description

### [Technical Field]

The present disclosure generally relates to a radio access network communication system, and more specifically, message relay apparatus and method if a service event occurs for a base station conforming to an open radio access network (O-RAN) standard using an E2 message of the radio communication system.

### [Background Art]

To meet the demand for wireless data traffic having increased since deployment of 4^{th} generation (4G) communication systems, efforts have been made to develop an improved 5^{th} generation (5G) or pre-5G communication system. Therefore, the 5G or pre-5G communication system is also called a 'Beyond 4G Network' or a 'Post LTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), receptionend interference cancellation and the like.

In the 5G system, Hybrid FSK and QAM Modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

The 5G system and new radio or next radio (NR) are commercialized to satisfy demand for wireless data traffic, and provide a high data rate service to a user through the 5G system like 4G, and it is also expected that wireless communication services for various purposes such as internet of things and a service requiring high reliability for a specific purpose_may be provided. Open radio access network (O-RAN) established by operators and equipment providers in a system where the current 4G communication system and the 5G system are mixed defines a new network element (NE) and an interface standard based on the existing 3rd generation partnership project (3GPP) standard, and suggests an O-RAN structure.

### [Disclosure of Invention]

### [Technical Problem]

As a 4th generation (4G)/5th generation (5G) communication system (hereafter, a 4G/5G system, new radio or next radio (NR)) is commercialized, a virtualized network requires a differentiated service support for users. Open-radio access network (O-RAN) newly defines the existing 3rd generation partnership project (3GPP) network entity (NE), radio unit (RU), distributed unit (DU), central unit (CU)-control plane (CP), and CU-user plane (UP) as O-RU, O-DU, O-CU-CP, and O-CU-UP respectively, and additionally standardizes a near-real-time RAN intelligent controller (RIC).

The present disclosure relates to an E2 subscription message for requesting a service from the newly defined RIC to the O-DU, the O-CU-CP or the O-CU-UP. In addition, the present disclosure relates to a method for subdividing and processing an E2 subscription message based on a user equipment (UE), a group, a cell, and a network slice. Herein, the O-RU, the O-DU, the O-CU-CP, and the O-CU-UP may be understood as objects constituting the RAN which may operate according to the O-RAN standard, and may be referred to as E2 nodes.

The RIC generates an E2 subscription request message, and sets a call processing EVENT by relaying it to the E2 NODE (e.g., the O-CU-CP, the O-CU-UP, the O-DU), and the E2 node relays the subscription request response message relayed to the RIC after the event setup. The present disclosure relates to an E2 indication message for a newly defined RIC to divide a call processing message corresponding to an E2 event occurring in O-DU, O-CU-CP, O-CU-UP for a whole message set in a subscription event condition or for each specific application protocol per I/F, and received in a container form in a cell unit, a group ID unit, a network slice unit, and a UE unit.

The present disclosure for solving the above problem includes, in a method of a first node of a wireless communication system, dividing a call processing message received at an E2 NODE from a call processing block for each I/F, generating the divided message in a cell unit, a user equipment (UE) unit, a group ID unit, and a network slice unit container, and relaying an E2 indication message from the E2 node to the RIC. In addition, the E2 indication message may be identified based on a detailed information element of the E2 indication transmitted from the RIC, and the information element information may include MESSAGE TYPE identifier information, RIC REQUEST ID identifier information, E2 NODE FUNCTION ID identifier information and RIC SUBSCRIPTION TYPE identifier information set based on the call processing function of E2 NODE.

### [Solution to Problem]

According to various embodiments of the present disclosure, a method performed by an E2 node may include transmitting a radio access network (RAN) intelligent controller (RIC) indication message to an RIC via an E2 interface, the RIC indication message may include indication type information, and the indication type may be one of types including 'insert' and 'report.

According to various embodiments of the present disclosure, a method performed by an RIC may include receiving an RIC indication message from an E2 node via an E2 interface, the RIC indication message may include indication type information, and the indication type may be one of types including 'insert' and 'report'.

According to various embodiments of the present disclosure, an apparatus functioning as an E2 node may include at least one transceive, and at least one processor coupled with the at least one transceiver, the at least one processor may be configured to transmit an RIC indication message to an RIC via an E2 interface, the RIC indication message may include indication type information, and the indication type may be one of types including 'insert' and 'report.

According to various embodiments of the present disclosure, an apparatus functioning as an RIC may include at least one transceiver, and at least one processor coupled with the at least one transceiver, the at least one processor is configured to receive an RIC indication message from an E2 node via an E2 interface, the RIC indication message may include indication type information, and the indication type may be one of types including 'insert' and 'report'.

### [Advantageous Effects of Invention]

An apparatus and a method according to various embodiments of the present disclosure, may indicate a type of a radio access network (RAN) intelligent controller (RIC) service through an indication message of an E2 node, and thus provide an effective service procedure between a near real time (RT) RIC and the E2 node.

Effects obtainable from the present disclosure are not limited to the above-mentioned effects, and other effects which are not mentioned may be clearly understood by those skilled in the art of the present disclosure through the following descriptions.

### [Brief Description of Drawings]

FIG. 1 illustrates an example of a 4th generation (4G) long term evolution (LTE) core system.
FIG. 2A illustrates an example of a 5th generation (5G) non-standard alone (NSA) system.
FIG. 2B illustrates an example of architecture for open (O)-radio access network (RAN).
FIG. 3 illustrates a protocol stack of an E2 application protocol message in a radio access network according to various embodiments of the present disclosure.
FIG. 4 illustrates an example of a connection between a base station and a RAN intelligence controller (RIC) in a radio access network according to various embodiments of the present disclosure.
FIG. 5 illustrates a configuration of a device in a radio access network according to various embodiments of the present disclosure.
FIG. 6 illustrates logical functions related to E2 messages of an E2 node and an RIC in a radio access network according to various embodiments of the present disclosure.
FIG. 7A illustrates an example of a signaling procedure between an E2 node and an RIC.
FIG. 7B illustrates an example of a subscription procedure between the E2 node and the RIC.
FIG. 8 through FIG. 12 illustrate examples of messages used for an E2 indicationbased message relay procedure.

### [Best Mode for Carrying out the Invention]

Terms used in the present disclosure are used merely to describe specific embodiments, and may not intend to limit the scope of other embodiments. Singular expressions may include plural expressions unless the context clearly indicates otherwise. Terms used herein, including technical or scientific terms, may have the same meaning as those commonly understood by a person of ordinary skill in the technical field described in the present disclosure. Among the terms used in the present disclosure, terms defined in a general dictionary may be interpreted as having the same or similar meanings as those in the context of the related art, and unless explicitly defined in the present disclosure, may not be interpreted as ideal or excessively formal meanings. In some cases, even terms defined in the present disclosure may not be interpreted to exclude embodiments of the present disclosure.

A hardware-based approach will be described as an example in various embodiments of the present disclosure to be described hereafter. However, various embodiments of the present disclosure include technology which uses both hardware and software, and accordingly various embodiments of the present disclosure do not exclude a software-based approach.

Hereafter, the preset disclosure relates to an apparatus and a method for performing a subscription procedure between a device in a radio access network (RAN) and a device for controlling the RAN in a wireless communication system.

Terms for signals, terms indicating channels, terms indicating control information, terms indicating network entities, and terms indicating components of a device used in the following explanation are illustrated for convenience of description. Accordingly, the present disclosure is not limited to the terms to be described, and other terms having the same technical meaning may be used.

In addition, the present disclosure describes various embodiments using terms used in some communication standard (e.g., 3rd generation partnership project (3GPP)), but this is only an example for description. Various embodiments of the present disclosure may be easily modified and applied in other communication systems.

Hereafter, an uplink indicates a radio link for transmitting data or a control signal from a user equipment (UE) or a mobile station (MS) to an eNode B or a base station (BS), and a downlink indicates a radio link for transmitting data or a control signal from the eNode B to the UE in the present disclosure. Also, the eNode B is an entity which performs resource allocation of the UE, and may be at least one of an eNode B, a Node B, a BS, a generation node B (gNB) radio access unit, a BS controller, or a node on the network. The UE may include a UE, an MS, a cellular phone, a smart phone, a computer, or a multimedia system for performing a communication function.

A 5^{th} generation (5G) communication system (hereafter, may be used interchangeably with a 5G system, a new radio or next radio (NR) system) is commercialized to satisfy demand for wireless data traffic, and provides a high data rate service to users through the 5G system like 4G, and it is also predicted that wireless communication services for various purposes such as internet of things and a service requiring high reliability for specific purposes may be provided.

Open-RAN (O-RAN) established by operators and equipment providers in a system where the current 4G communication system and the 5G system are mixed defines a new network element (NE) and an interface standard based on the existing 3GPP standard, and thus presents an O-RAN structure. The O-RAN newly defines the existing 3GPP network entity (NE), radio unit (RU), distributed unit (DU), central unit (CU)-control plane (CP), and CU-user plane (UP) as O-RU, O-DU, O-CU-CP, and O-CU-UP respectively, and besides, the O-RAN has standardized a near-real-time RAN intelligent controller (RIC) and a non-real-time (NRT) RIC. For example, the RIC may be a server intensively deployed at one physical place. In addition, the RIC may be a logical node for collecting information on a cell site transmitted and received by a UE and the O-DU, the O-CU-CP or the O-CU-UP. The O-DU and the RIC, the O-CU-CP and the RIC, and the O-CU-UP and the RIC may be connected via Ethernet. For doing so, an interface standard for communications between the O-DU and the RIC, between the O-CU-CP and the RIC, and between the O-CU-UP and the RIC are required, and message formats such as E2-DU, E2-CU-CP, E2-CU-UP requires defining procedures between the O-DU, the O-CU-CP, the O-CU-UP and the RIC. In particular, differentiated service support is required for users in a virtualized network, and it is necessary to define functions of messages of E2-DU, E2-CU-CP and E2-CU-UP to support a service for wide cell coverage, by concentrating a call processing message/function generating in the O-RAN on the RIC.

Specifically, the RIC may generate and transmit an E2 subscription message to the O-DU, the O-CU-CP, or the O-CU-UP and thus set an event occurrence condition. The O-DU, the O-CU-CP, or the O-CU-UP may determine that the set condition is satisfied, load a 3GPP call processing message corresponding to the satisfied condition in a container to the RIC, classify into a user identifier, a cell identifier, a network slice identifier and so on, and then transmit through an E2 indication/report.

Call processing message information collected in the O-RAN based on the user identifier may be identified that the RIC is for a specific user/specific cell/specific network slice per I/F. The collected information may be transmitted from at least one of the (O-)CU-CP, the (O-)CU-UP, and the (O-)DU. The RIC may identify based on the user identifier that information collected from different entities is related to one specific user/specific cell/specific network slice, provide a specialized service for the specific user/specific cell/specific network slice with respect to a plurality of cells/network slices based on the collected information, and determine a key performance indicator (KPI) of the service provided to each user.

Since a general call processing service is restricted to a base station basis, the number of supportable cells is limited. In addition, since the collected information is limited to a specific base station, efficient monitoring on radio resources for the whole was not possible. According to various embodiments of the present disclosure, the RIC may collect call processing messages (e.g., E1, F1, X2, XN, RRC, etc.) per I/F or respectively generated by the O-RU, the O-DU, the O-CU-CP or the O-CU-UP, and thus efficiently provide resource optimization and a user specific service or a user requested service with respect to the specific user/specific cell/specific network slices for wide cells. For example, the RIC may configure an additional carrier by efficiently dividing the network slice or by serving a specific terminal through carrier aggregation for the resource optimization, or configure an additional cell for performing dual access to serve a specific terminal through dual connectivity (DC). In addition, the RIC may configure a specific terminal to avoid connection with a specific cell and to connect with a specific cell in inter-cell movement. In addition, the RIC may efficiently perform the resource optimization through machine learning through analysis based on the collected information. In addition, the resource optimization of the present disclosure is not limited to the described content. Also, according to the present disclosure, it is possible not only to collect information per terminal but also to collect and analyze information per bearer.

The collected information of the specific user may be used at a collection server, the RIC or the NRT-RIC but may be also provided to an operations support system (OSS) or/and a business support system (BSS) to provide the specialized service to the user.

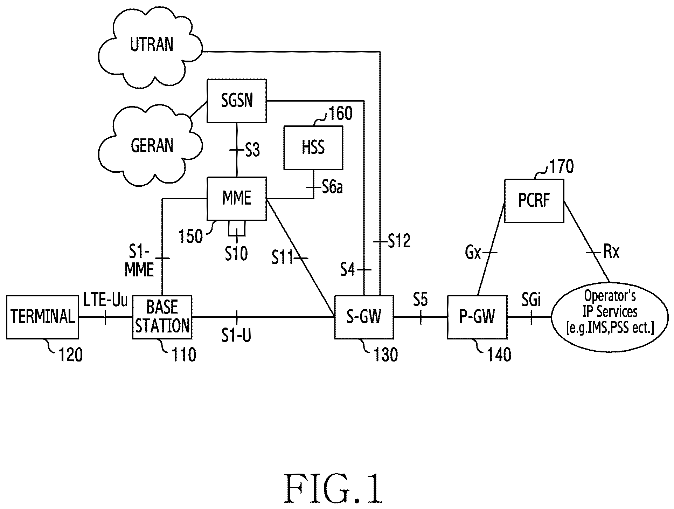

FIG. 1 illustrates an example of a 4th generation (4G) long term evolution (LTE) core system.

Referring to FIG. 1, the LTE core system includes a base station 110, a terminal 120, a serving gateway (S-GW) 130, a packet data network gateway (P-GW) 140, a mobility management entity (MME). 150, a home subscriber server (HSS) 160, and a policy and charging rule function (PCRF) 170.

The base station 110 is a network infrastructure for providing radio access to the terminal 120. For example, the base station 110 is a device which performs scheduling by collecting status information such as a buffer status, an available transmission power, and a channel status of the terminal 110. The base station 110 has coverage defined as a specific geographic region based on a signal transmission distance. The base station 110 is connected to the MME 150 via an S1-MME interface. Besides the base station, the base station 110 may be referred to as an 'access point (AP)', an 'eNodeB (eNB)', a 'wireless point', and a 'transmission/reception point (TRP)' or other term having the equivalent technical meaning.

The terminal 120 is a device used by the user, and performs communication with the base station 110 over a radio channel. In some cases, the terminal 120 may be operated without user's involvement. That is, at least one of the terminal 120 and the terminal 130 is a device which performs machine type communication (MTC), and may not be carried by the user. Besides the terminal, the terminal 120 may be referred to as a 'UE', a 'mobile station', a 'subscriber station', a 'customer-premises equipment (CPE)', a 'remote terminal', a 'wireless terminal', or a 'user device', or other term having the equivalent technical meaning.

The S-GW 130 provides a data bearer, and generates or controls the data bearer under control of the MME 150. For example, the S-GW 130 processes a packet arriving from the base station 110 or a packet to be forwarded to the base station 110. In addition, the S-GW 130 may perform an anchoring role in handover of the terminal 120 between base stations. The P-GW 140 may function as a connection point to an external network (e.g., an internet network). In addition, the P-GW 140 allocates an internet protocol (IP) address to the terminal 120, and serves as an anchor for the S-GW 130. In addition, the P-GW 140 may apply quality of service (QoS) policy of the terminal 120, and manage account data.

The MME 150 manages mobility of the terminal 120. In addition, the MME 150 may perform authentication, bearer management, and the like on the terminal 120. That is, the MME 150 is responsible for mobility management and various control functions of the terminal. The MME 150 may interwork with a serving general packet radio service (GPRS) support node (SGSN).

The HSS 160 stores key information and a subscriber profile for the authentication of the terminal 120. The key information and the subscriber profile are transmitted from the HSS 160 to the MME 150 if the terminal 120 accesses the network.

The PCRF 170 defines a policy and a charging rule. The stored information is forwarded from the PCRF 180 to the P-GW 140, and the P-GW 140 may control the terminal 120 (e.g., QoS management, charging, etc.) based on the information provided from the PCRF 180.

Carrier aggregation (hereafter, 'CA') technology is a technology which combines a plurality of component carriers, and transmits and receives at one terminal a signal using the plurality of the component carriers at the same time and thus increases frequency use efficiency in terms of the terminal or the base station. Specifically, according to the CA technology, the terminal and the base station may transmit and receive signals using a broadband using the plurality of the component carriers in the uplink (UL) and the downlink (DL), wherein the component carriers are located in different frequency bands respectively. Hereafter, the UL indicates a communication link through which the terminal transmits a signal to the base station, and the DL indicates a communication link through which the base station transmits a signal to the terminal. At this time, the numbers of uplink component carriers and downlink component carriers may be different.

Dual connectivity or multi connectivity is a technology for increasing the frequency use efficiency in terms of the terminal or the base station, in which one terminal is connected to a plurality of different base stations and transmits and receives signals simultaneously using carriers within the plurality of the base stations positioned in different frequency bands. The terminal may be connected to a first base station (e.g., a base station which provides services using the LTE technology or the 4G mobile communication technology) and a second base station (e.g., a base station which provides services using the NR technology or 5G mobile communication technology) at the same time to transmit and receive traffic. In this case, frequency resources used by each base station may be positioned in different bands. As such, the operation scheme based on the dual connectivity scheme of the LTE and the NR may be referred to as 5G non-standalone (NSA).

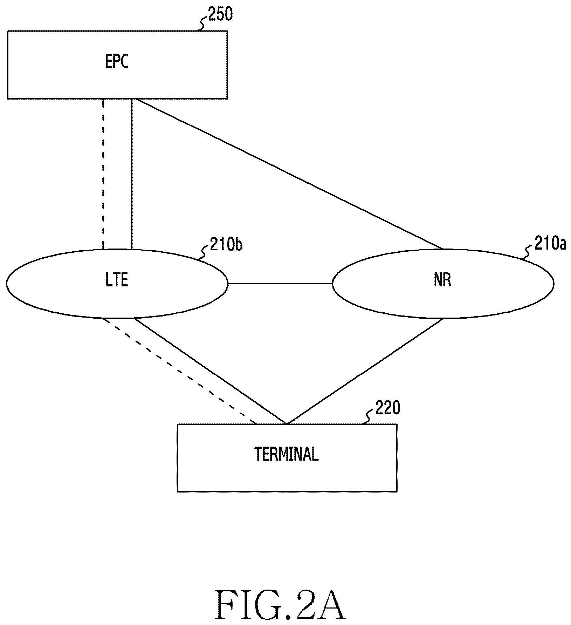

FIG. 2A illustrates an example of a 5G NSA system.

Referring to FIG. 2A, the 5G NSA system includes an NR RAN 210a, an LTE RAN 210b, a terminal 220, and an evolved packet core network (EPC) 250. The NR RAN 210a and the LTE RAN 210b are connected to the EPC 150, and the terminal 220 may be served by any one or both of the NR RAN 210a and the LTE RAN 210b at the same time. The NR RAN 210a includes at least one NR base station, and the LTE RAN 210b includes at least one LTE base station. Herein, the NR base station may be referred to as a '5G node', a 'gNB' or other term having the equivalent technical meaning. In addition, the NR base station may have a structure divided into a CU and a DU, and the CU may also have a structure divided into a CU-CP unit and a CU-UP unit.

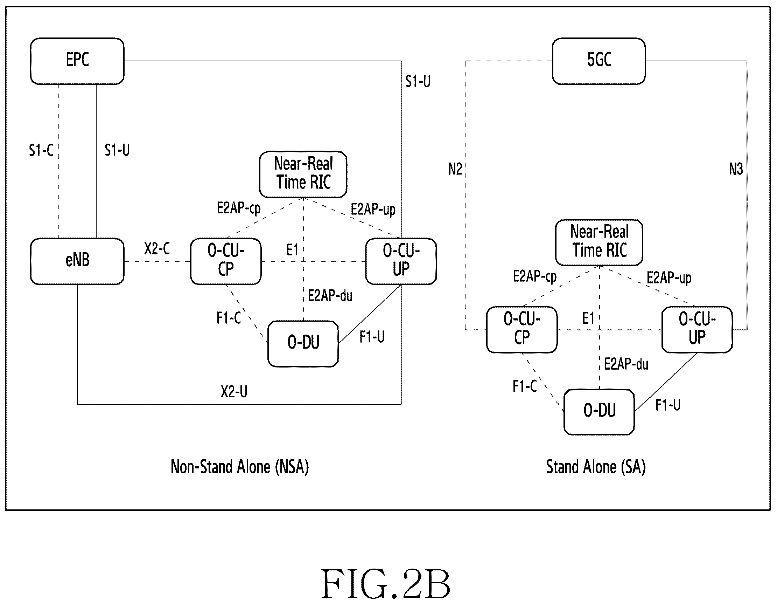

In the structure shown in FIG. 2, the terminal 220 may perform radio resource control (RRC) access through the first base station (e.g., a base station belonging to the LTE RAN 210b), and may be served with functions (e.g., connection management, mobility management, etc.) provided in the control plane. In addition, the terminal 220 may receive additional radio resources for transmitting and receiving data via a second base station (e.g., a base station belonging to the NR RAN 210a). This dual connectivity technology using the LTE and the NR may be referred to as evolved universal terrestrial radio access (E-UTRA)-NR (EN) - dual connectivity (DC). Similarly, the dual connectivity technology in which the first base station uses the NR technology and the second base station uses the LTE technology is referred to as NR-E-UTRA (NE) - DC. In addition, various embodiments may be applied to the multi connectivity and the CA technology of various types. In addition, various embodiments may be applicable even if a first system using a first communication technology and a second system using a second communication technology are implemented in one device or if the first base station and the second base station are located at the same geographic location.

FIG. 2B shows an architecture example for the O-RAN. For the sake of E2-SM-KPI monitoring (KPIMON) of an E2 service model, an O-RAN non-stand alone in the multiconnectivity operation using the E-UTRA and the NR radio access technology is considered, whereas the E2 node may be assumed to be in an O-RAN stand alone mode.

Referring to FIG. 2B, in deployment of the O-RAN non-stand alone mode, the eNB is connected with the EPC via an S1-C/S1-U interface, and is connected with the O-CU-CP via an X2 interface. The O-CU-CP for the deployment of the O-RAN stand alone mode may be connected with a 5G core (5GC) through an N2/N3 interface.

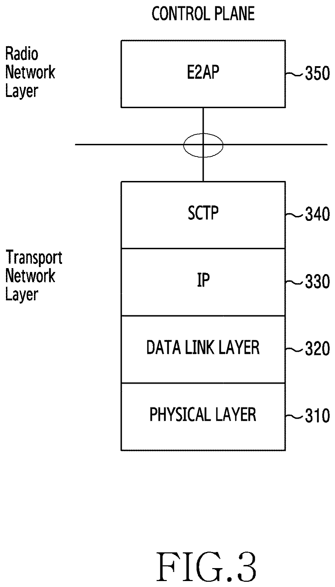

FIG. 3 illustrates a protocol stack of an E2 application protocol message in a radio access network according to various embodiments of the present disclosure. Referring to FIG. 3, a control plane includes a transport network layer and a radio network layer. The transport network layer includes a physical layer 310, a data link layer 320, an IP 330, and a stream control transmission protocol (SCTP) 340.

The radio network layer includes an E2AP 350. The E2AP 350 is used to deliver a subscription message, an indication message, a control message, a service update message, and a service query message, and is transmitted in a higher layer of the SCTP 340 and the IP 330.

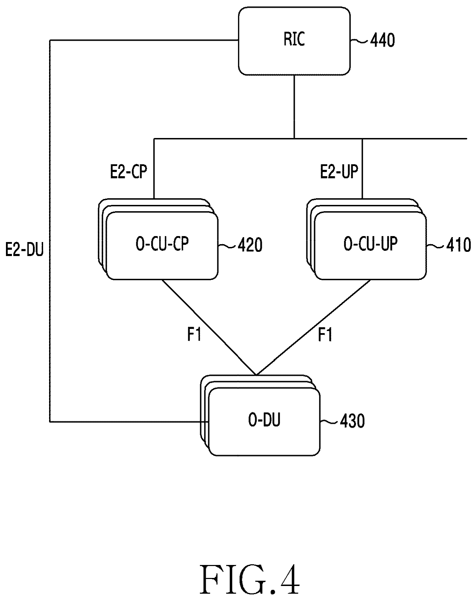

FIG. 4 illustrates an example of a connection between a base station and an RIC in a radio access network according to various embodiments of the present disclosure.

Referring to FIG. 4, an RIC 440 is connected to an O-CU-CP 420, an O-CU-UP 410, and an O-DU 430. The RIC 440 is a device for controlling a RAN node (or a device for performing a RAN function, for example, the O-CU-CP 420, the O-CU-UP 410, and the O-DU 430). The RIC 440 may be defined as a deice for customizing RAN functionality for a new service or reginal resource optimization. The RIC 440 may provide functions such as network intelligence (e.g., policy enforcement, handover optimization), resource assurance (e.g., radio-link management, advanced self-organized-network (SON)), resource control (e.g., load balancing, slicing policy). The RIC 440 may communicate with the O-CU-CP 420, the O-CU-UP 410, and the O-DU 430. The RIC 440 may be connected to each node via E2-CP, E2-UP, and E2-DU interfaces. In addition, the interface between the O-CU-CP and the DU and between the O-CU-UP and the DU may be referred to as an F1 interface. In the following description, the DU and the O-DU, the CU-CP and the O-CU-CP, and the CU-UP and the O-CU-UP may be used interchangeably.

While FIG. 4 illustrates one RIC 440, a plurality of RICs may exist, according to various embodiments. The plurality of the RICs may be implemented with a plurality of hardware located at the same physical location or may be implemented through virtualization using single hardware.

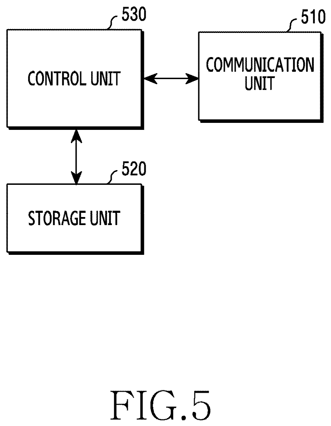

FIG. 5 illustrates a configuration of a device according to various embodiments of the present disclosure. The structure illustrated in FIG. 5 may be understood as a configuration of a device having at least one function of the RIC, the O-CU-CP, the O-CU-UP, and the O-DU of FIG. 5. A term such as '...unit' or '...er' used hereafter indicates a unit for processing at least one function or operation, and may be implemented using hardware, software, or a combination of hardware and software.

Referring to FIG. 5, a core network device includes a communication unit 510, a storage unit 520, and a control unit 530.

The communication unit 510 provides an interface for performing communication with other devices in the network. That is, the communication unit 510 converts a bit string transmitted from the core network device to other device into a physical signal, and converts a physical signal received from other device into a bit string. That is, the communication unit 510 may transmit and receive signals. Accordingly, the communication unit 510 may be referred to as a modem, a transmitter, a receiver, or a transceiver. In this case, the communication unit 510 enables the core network device to communicate with other devices or systems via a backhaul connection (e.g., wired backhaul or wireless backhaul) or over the network.

The storage unit 520 stores data such as a basic program, an application program, and setting information for the operations of the core network device. The storage unit 520 may include a volatile memory, a nonvolatile memory, or a combination of a volatile memory and a nonvolatile memory. The storage unit 520 provides the stored data according to a request of the control unit 530.

The control unit 530 controls general operations of the core network device. For example, the control unit 530 transmits and receives signals through the communication unit 510. In addition, the control unit 530 records and reads data in and from the storage unit 520. For doing so, the control unit 530 may include at least one processor. According to various embodiments, the control unit 530 may control the device to carry out operations according to various embodiments explained in the present disclosure.

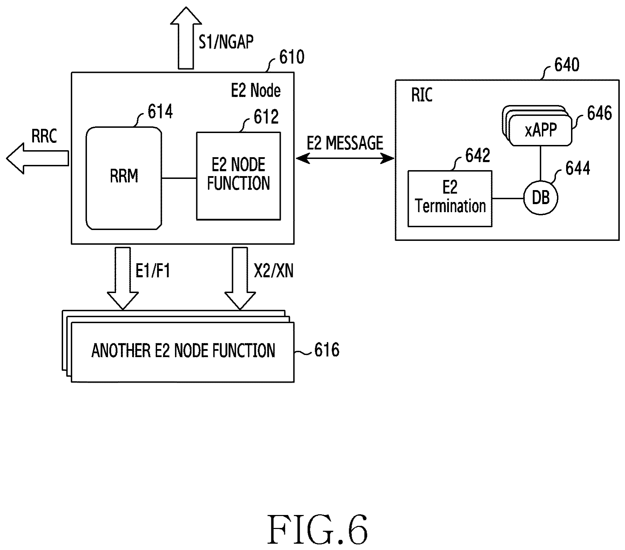

FIG. 6 illustrates logical functions related to E2 messages of an E2 node and an RIC in a radio access network according to various embodiments of the present disclosure.

Referring to FIG. 6, an RIC 640 and an E2 node 610 may transmit or receive an E2 message with each other. For example, the E2 node 610 may be an O-CU-CP, an O-CU-UP, an O-DU, or a base station. A communication interface of the E2 node may be determined according to the type of the E2 node 610. For example, the E2 node 610 may communicate with another E2 node 616 through the E1 interface or the F1 interface. Alternatively, for example, the E2 node 610 may communicate with the E2 node 616 through an X2 interface or an XN interface. Alternatively, for example, the E2 node 610 may perform communication through an S1 interface or a next generation application protocol (NGAP) interface (i.e., an interface between a next generation (NG) RAN node and an AMF).

The E2 node 610 may include an E2 node function 612. The E2 node function 612 is a function corresponding to a specific xApp (application S/W) 646 installed in the RIC 640. For example, in the KPI monitor, KPI monitor collection S/W may be installed in the RIC 640, and the E2 node 610 may include the E2 node function 612 which generates KPI parameters, and then forwards an E2 message including the KPI parameters to an E2 termination 642 positioned at the RIC 640. The E2 node 610 may include the E2 node function 612 which generates KPI parameters and relays an E2 message including the KPI parameters to the E2 termination 642 positioned at the RIC 640. The E2 termination 624 positioned in the RIC 640, which is a termination of the RIC 640 for the E2 message, may perform a function of interpreting E2 report/insert messages relayed by the E2 node 610 and relaying them to the xApp 646. The E2 node 610 may include a radio resource management (RRM) 614. The E2 node 610 may manage resources provided to the radio network for the terminal.

The E2 termination 624 positioned in the RIC 640, which is the termination of the RIC 640 for the E2 message, may perform a function of interpreting the E2 message forwarded by the E2 node 610 and then relaying it to the xApp 646. A database (DB) 644 positioned in the RIC 640 may be used for the E2 termination 624 or the xApp 616. The E2 node 610 shown in FIG. 6 is a termination of at least one interface, and may be understood as a termination of messages relayed to a terminal, a neighbor base station, and a core network.

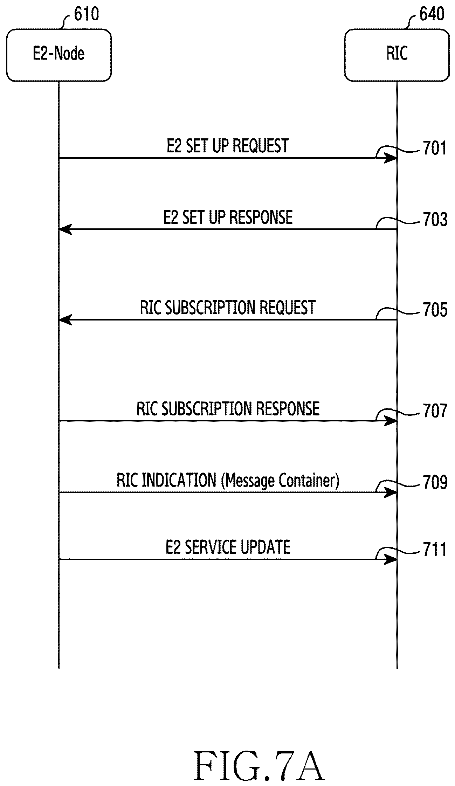

FIG. 7A illustrates an example of a signaling procedure between an E2 node and an RIC. Specifically, FIG. 7A illustrates a setup procedure and an RIC subscription message relay procedure of E2 I/F between the E2 node and the RIC. The E2 node 610 is illustrated as the E2 node, and the RIC 640 is illustrated as the RIC.

Referring to FIG. 7A, the E2 node 610 may transmit an E2 setup request message to the RIC 640 in step 701. An E2 NODE FUNCTION function positioned in the E2 node 610 finds the RIC using an RIC IP address which is set to operations, administration and management (OAM) and transmits the E2 SET UP REQUEST message. The E2 SET UP REQUEST message includes RAN function definition which defines the function of the RAN supported by the E2 node, E2 node ID information, and so on. A RAN function definition value is a value set to the OAM and the RIC may receive information of the set value with the OAM and determine which call processing function the E2 node supports with the RAN function definition value.

In step 703, the RIC may receive an E2 setup response message from the E2 node. If accepting the E2 SETUP REQUEST message transmitted by the E2 node, the RIC may transmit the E2 SETUP RESPONSE message.

In step 705, the RIC may transmit a subscription request message to the E2 node. A specific xApp positioned in the RIC requests the RIC E2 termination function to subscribe (or subscribe) for a specific RAN function definition function supported by E2. Herein, the subscription request message of step 705 may be included in the E2 SETUP RESPONSE message of step 703 and transmitted together, according to an embodiment. For example, the RAN function may include functions of X2AP, F1AP, E1AP, S1AP, and NGAP interfaces, or an internal RAN function for controlling UEs or cells.

In step 707, the E2 node may transmit a subscription request response to the RIC. The E2 node function of the E2 node decodes the subscription request message, successfully sets the event condition requested by the RIC to the E2 node function and then relays the subscription response to the RIC that the event trigger condition is successfully set.

In step 709, the E2 node may transmit an E2 RIC indication message to the RIC. If a specific event condition occurs, the E2 node relays the E2 RIC indication message to the RIC.

In step 711, the E2 node may transmit an E2 service update message to the RIC. If a change occurs in an E2 NODE function capability information element (E2 NodeCapa), the E2 node transmits the changed E2 NodeCapa in the E2 SERVICE UPDATE to the RIC.

In FIG. 7A, the SET UP procedure, the RIC subscription procedure, the RIC indication procedure, and the update message transmission procedure are sequentially described, but various embodiments of the present disclosure are not limited to the above-described order and procedures. That is, in some embodiments, the E2 node and the RIC may independently perform the E2 setup procedure of step 701 through step 703. In some embodiments, the E2 node and the RIC may independently perform the subscription procedure of step 705 through step 707. Meanwhile, according to another embodiment, the E2 setup response message may include the subscription request message, as described above. In some embodiments, the E2 node and the RIC may independently perform the RIC indication procedure of step 709. Further, in some embodiments, the E2 node and the RIC may independently perform the RIC indication procedure of step 709. In addition, the E2 node and the RIC may perform at least some of the above-described procedures together or separately.

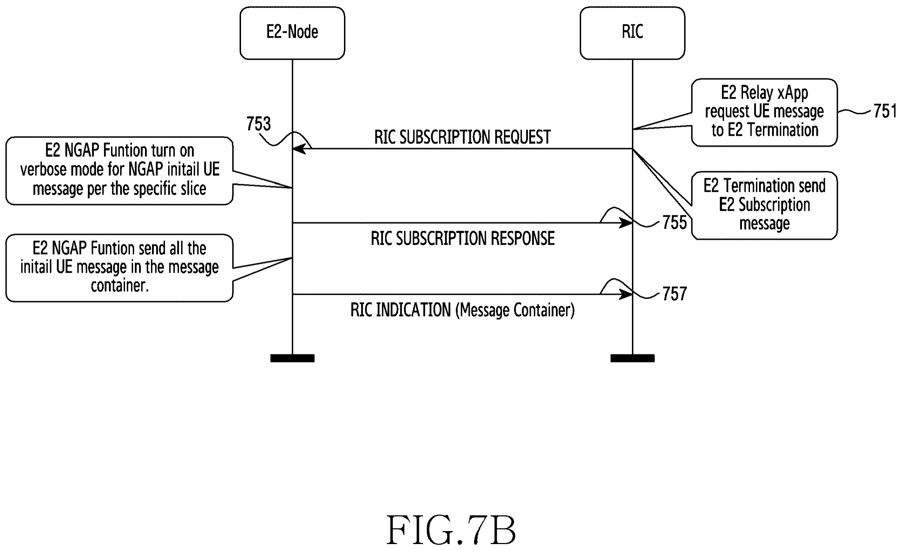

FIG. 7B illustrates an example of the subscription procedure between the E2 node and the RIC. The E2 node 610 is illustrated as the E2 node, and RIC 640 is illustrated as the RIC.

Referring to FIG. 7B, in step 751, the RIC may request subscription from the E2 termination. For example, the E2 Relay xApp positioned in the RIC may request the subscription for the initial UE message in the NGAP I/F for the E2 Relay message function from the RIC E2 termination function.

In step 753, the RIC may transmit an RIC subscription request to the E2 node. For example, the RIC E2 termination function generates an initial UE message relay message for the NGAP I/F requested in step 751 as an E2 subscription request message and relays it to the E2 node.

In step 755, the E2 node may transmit an RIC subscription response to the RIC. Specifically, the E2 node function of the E2 node receiving the E2 subscription request message may decode the message, successfully set the event condition for transmitting to the RIC in a container including the RIC indication message per UE, per cell or per network slice if the initial UE message occurs in the NGAP I/F, and then relay the subscription response to the RIC that the event trigger condition is successfully set.

In step 757, the E2 node may transmit an RIC indication to the RIC. If an Initial UE message occurs in the NGAP I/F by the UE, the E2 node may relay the E2 RIC Indication message including the NGAP Initial UE message in the container to the RIC.

Some contents described in FIG. 7A may be applied to FIG. 7B in the same or similar manner.

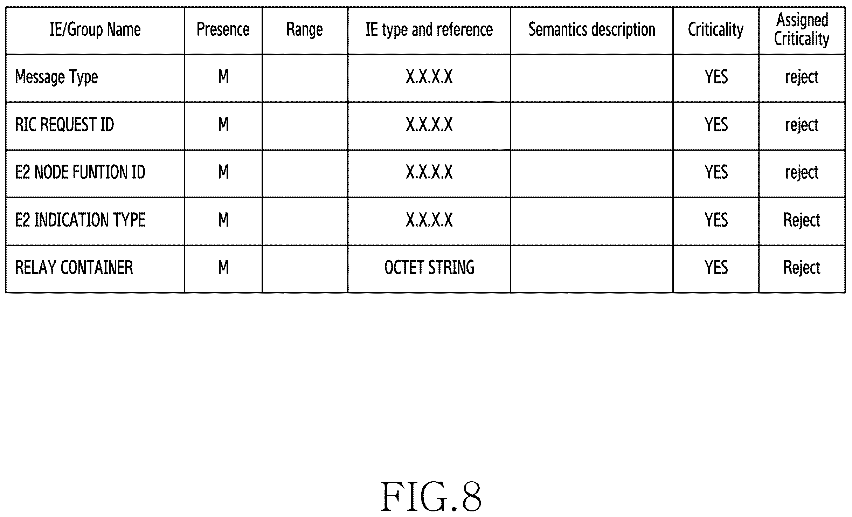

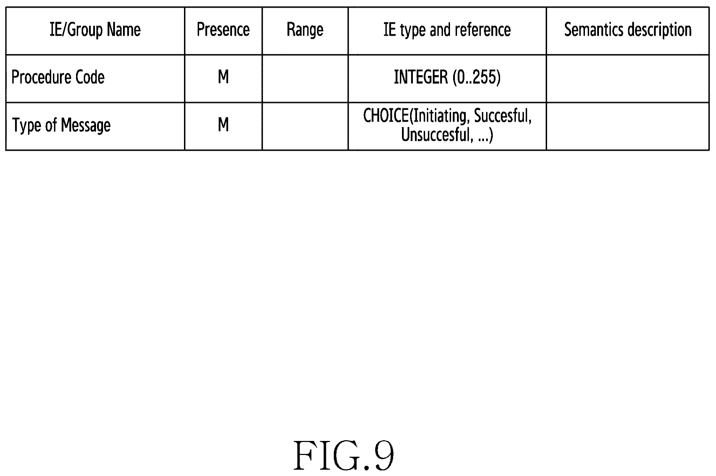

FIG. 8 illustrates IEs of an E2 indication message. The first IE is Message Type, and Message Type has a unique value for each E2 message. Details of the Message Type are shown in FIG. 9.

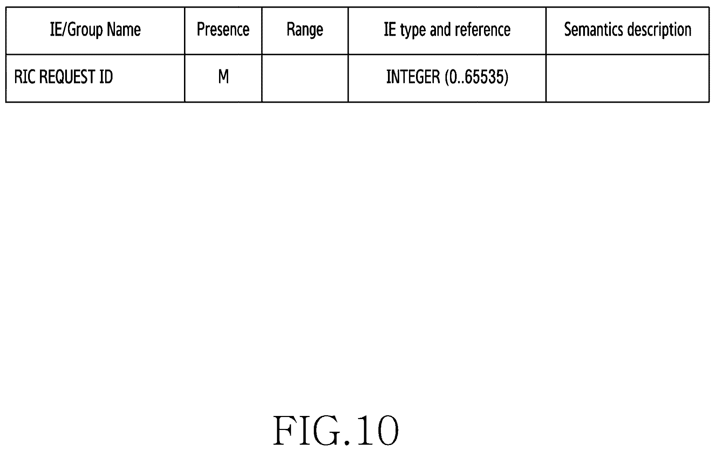

The second IE designates a specific xApp with RIC REQUEST ID. Message details are shown in FIG. 10.

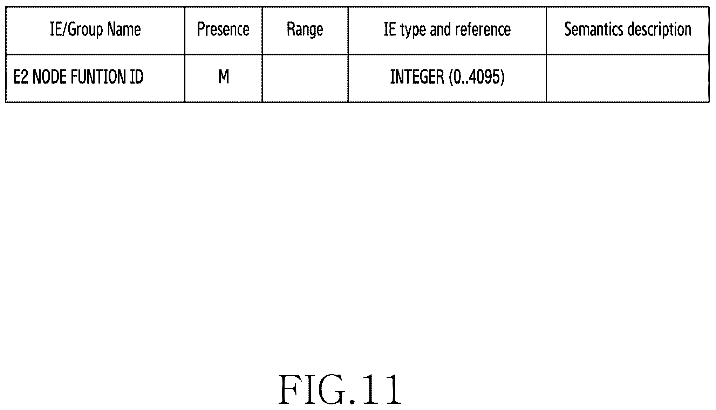

The third IE is E2 NODE FUNCTION ID. The E2 NODE FUNCTION ID may divide the range value for each E2 node and thus designate a specific E2 NODE FUNCTION to a specific E2 node. Message details are shown in FIG. 11.

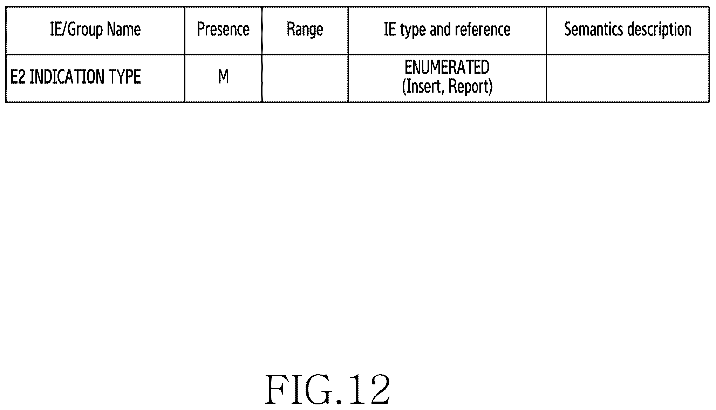

The fourth IE is RIC INDICATION TYPE (or may be expressed as E2 INDICATION TYPE). The RIC INDICATION TYPE designates whether the INDICATION occurrence in the E2 node is REPORT of a specific process or an addition to a message of an existing process. Details of the indication type are shown in FIG. 12.

The fifth IE allows the E2 message relay container (or may be expressed as RELAY CONTAINER) defined in the present disclosure to transmit any type of the message designated in the subscription message in the form of an Octet string.

In FIG. 8, all are shown to be included as mandatory, but embodiments of the present disclosure are not limited thereto. According to another embodiment, at least one of the illustrated IEs functions as optional, and for example, the corresponding IE may be omitted in the RIC indication message.

FIG. 9 is details of Message Type IE. The procedure code value which is the first IE, is an integer value with the range of 0 ~ 255, and a specific MESSAGE TYPE (PROCEDURE CODE) is set. For example, the procedure code value 0 may be set to subscription, the procedure code value 1 may be set to E2 SETUP configuration, and the procedure code value 2 may be set to the indication request message value from 0 to 255, that is, 256 message value configurations in total. For example, the O-RAN defines [Table 1] below.

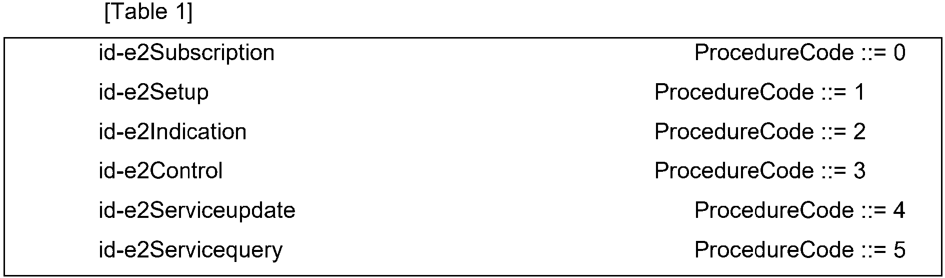

Type of message which is the second IE in Message Type indicates the Message type, and may define initiating, successful, unsuccessful messages.

FIG. 10 is an RIC REQUEST ID value. The RIC Request ID value is an integer value in the range of 0 ~ 65535, and may set a value unique to a specific xApp.

FIG. 11 is an E2 NODE FUNCTION ID value. The E2 NODE FUNCTION ID value is an integer value in the range of 0 ~ 4095, and may be set by dividing the range value per E2 node.

**[Table 2]**

| |
|---|
| O-CU-CP (1~512) |
| O-CU-UP (513∼1024) |
| O-DU (1025∼1536) |
| O-RAN eNB (1537∼2048) |

The value after 2048 is the reserved value and may be set if an additional E2 node is added.

FIG. 12 is E2 INDICATION TYPE value. The E2 INDICATION TYPE value is a string value in the range of 'Insert' and 'Report', and may be defined as a service value of the indication message for a specific function of a specific E2 NODE FUNCTION of the E2 node. For example, the I/F-based message relay function may be defined as a REPORT message.

Various embodiments of the present disclosure may set the event condition in the call processing function (per I/F, per call processing function) of the O-RU, the O-DU, the O-CU-CP or the O-CU-UP with the E2 SUBSCRIPTION message, relay it to the RIC by including the 3GPP message in the container for a specific call processing function or every call processing function generated for each I/F, and thus efficiently provide the call processing request service of the RIC.

The methods according to the embodiments described in the claims or the specification of the present disclosure may be implemented in software, hardware, or a combination of hardware and software.

As for the software, a computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the embodiments described in the claims or the specification of the present disclosure.

Such a program (software module, software) may be stored to a random access memory, a non-volatile memory including a flash memory, a read only memory (ROM), an electrically erasable programmable ROM (EEPROM), a magnetic disc storage device, a compact disc (CD)-ROM, digital versatile discs (DVDs) or other optical storage devices, and a magnetic cassette. Alternatively, it may be stored to a memory combining part or all of those recording media. A plurality of memories may be included.

Also, the program may be stored in an attachable storage device accessible via a communication network such as internet, intranet, local area network (LAN), wide LAN (WLAN), or storage area network (SAN), or a communication network by combining these networks. Such a storage device may access a device which executes an embodiment of the present disclosure through an external port. In addition, a separate storage device on the communication network may access the device which executes an embodiment of the present disclosure.

In the specific embodiments of the present disclosure, the components included in the present disclosure are expressed in a singular or plural form. However, the singular or plural expression is appropriately selected according to a proposed situation for the convenience of explanation, the present disclosure is not limited to a single component or a plurality of components, the components expressed in the plural form may be configured as a single component, and the components expressed in the singular form may be configured as a plurality of components.

Meanwhile, while the specific embodiment has been described in the detailed explanations of the present disclosure, it will be noted that various changes may be made therein without departing from the scope of the present disclosure.

In addition to the foregoing explanations, the following enumerated aspects, which must not be confused with the appended claims, are also relevant for the present disclosure:
1. A method performed by an E2 node, comprising: transmitting a radio access network (RAN) intelligent controller (RIC) indication message to an RIC via an E2 interface, wherein the RIC indication message comprises indication type information, and the indication type is one of types comprising 'insert' and 'report.
2. The method of aspect 1, wherein the indication type indicates a message type related to an RIC service relayed to the RIC.
3. The method of aspect 2, wherein the indication message is transmitted based on an event trigger.
4. The method of aspect 1, wherein the RIC indication message further comprises a message type, an RIC request identifier (ID), and a RAN function ID, and the indication type is a service value of a function corresponding to the RAN function ID of the E2 node.
5. The method of aspect 1, wherein the RIC is a near real time (RT) RIC, and the E2 node comprises an O-RAN distributed unit (O-DU), an O-RAN central unit-control plane (O-CU-CP), an O-RAN central unit - user plane (O-CU-UP), or an O-RAN eNodeB (O-eNB).
6. A method performed by a radio access network (RAN) intelligent controller (RIC), comprising: receiving an RIC indication message from an E2 node via an E2 interface, wherein the RIC indication message comprises indication type information, and the indication type is one of types comprising 'insert' and 'report'.
7. The method of aspect 6, wherein the indication type indicates a message type related to an RIC service relayed to the RIC.
8. The method of aspect 7, wherein the indication message is transmitted based on an event trigger.
9. The method of aspect 6, wherein the RIC indication message further comprises a message type, an RIC request identifier (ID), and a RAN function ID, and
   the indication type is a service value of a function corresponding to the RAN function ID of the E2 node.
10. The method of aspect 6, wherein the RIC is a near real time (RT) RIC, and
   the E2 node comprises an O-RAN distributed unit (O-DU), an O-RAN central unit-control plane (O-CU-CP), an O-RAN central unit - user plane (O-CU-UP), or an O-RAN eNodeB (O-eNB).
11. An apparatus functioning as an E2 node, comprising: at least one transceiver; and at least one processor coupled with the at least one transceiver, wherein the at least one processor is configured to perform one of the methods of aspect 1 through 5.
12. An apparatus functioning as a radio access network (RAN) intelligent controller (RIC), comprising: at least one transceiver; and at least one processor coupled with the at least one transceiver, wherein the at least one processor is configured to perform one of the methods of aspects 6 through 10.

## Claims

1. A method performed by an E2 node (610) of an open-radio access network, O-RAN, the method comprising:
transmitting, to a radio access network, RAN, intelligent controller, RIC, (640) of the O-RAN via an E2 interface, a RIC indication message including an RIC request identifier, ID, and a RAN function ID.

2. The method of claim 1,
wherein the RIC indication message comprises indication type information indicating a type of RIC service corresponding to the RAN function ID of the E2 node.

3. The method of claim 2,
wherein the type of RIC service includes insert and report.

4. The method of claim 1,
wherein the RIC indication message further includes message type information,
wherein the message type information includes a procedure code value and a type of the message,
wherein the procedure code value indicates RIC subscription, setup, RIC indication, RIC control, RIC service update, or RIC service query, and
wherein the type of the message indicates initial, successful, or unsuccessful.

5. The method of claim 1, wherein the RIC (640) is a near real time, RT, RIC, and
the E2 node (610) comprises an O-RAN distributed unit, O-DU, an O-RAN central unit-control plane, O-CU-CP, an O-RAN central unit - user plane, O-CU-UP, or an O-RAN eNodeB, O-eNB.

6. A method performed by a radio access network, RAN, intelligent controller, RIC, (640) of an open-radio access network, O-RAN, the method comprising:
receiving an RIC indication message including an RIC request identifier, ID, and a RAN function ID from an E2 node (610) of the O-RAN via an E2 interface.

7. The method of claim 6,
wherein the RIC indication message comprises indication type information indicating a type of RIC service corresponding to the RAN function ID of the E2 node.

8. The method of claim 7,
wherein the type of RIC service includes insert and report.

9. The method of claim 6,
wherein the RIC indication message further includes message type information,
wherein the message type information includes a procedure code value and a type of the message,
wherein the procedure code value indicates RIC subscription, setup, RIC indication, RIC control, RIC service update, or RIC service query, and
wherein the type of the message indicates initial, successful, or unsuccessful.

10. The method of claim 6, wherein the RIC (640) is a near real time, RT, RIC, and
the E2 node comprises an O-RAN distributed unit, O-DU, an O-RAN central unit-control plane, O-CU-CP, an O-RAN central unit - user plane, O-CU-UP, or an O-RAN eNodeB, O-eNB.

11. An apparatus functioning as an E2 node (610) of an open-radio access network, O-RAN, comprising:
at least one transceiver; and
at least one processor coupled with the at least one transceiver,
wherein the at least one processor is configured to perform the methods of any one of claim 1 to 5.

12. An apparatus functioning as a radio access network, RAN, intelligent controller, RIC, (640) of an open-radio access network, O-RAN, comprising:
at least one transceiver; and
at least one processor coupled with the at least one transceiver,
wherein the at least one processor is configured to perform the methods of any one of claims 6 to 10.
